# EUROPEAN PATENT SPECIFICATION

(11) **EP 3 559 346 B1**
(45) Date of publication and mention of the grant of the patent: **02.06.2021**
(21) Application number: 17833048.6
(22) Date of filing: 20.12.2017
(51) Int. Cl.: D21H 19/28, D21H 19/60, D21H 21/14

(54) **COATED SUBSTRATES INCLUDING COMPOSTABLE COATINGS AND METHODS FOR PRODUCING THE SAME**
BESCHICHTETE SUBSTRATE MIT KOMPOSTIERBAREN BESCHICHTUNGEN UND VERFAHREN ZUR HERSTELLUNG DAVON
SUBSTRATS REVÊTUS COMPRENANT DES REVÊTEMENTS COMPOSTABLES ET PROCÉDÉS DE PRODUCTION DE TELS SUBSTRATS REVÊTUS

(30) Priority: 20.12.2016 US 201662436615 P
(43) Date of publication of application: 30.10.2019
(73) Proprietor: Michelman, Inc., Cincinnati, OH 45236-1232 (US)
(72) Inventor: HIPPS, Jesse, Cincinnati, Ohio 45236-1232 (US); STOKES, Frederick L., Cincinnati, Ohio 45236-1232 (US); WILLIAMS, Emily, Cincinnati, Ohio 45236-1232 (US); CONRAD, Patrick Joseph, 45236-1232 (US)
(74) Representative: Arnold & Siedsma
(86) International application number: PCT/US2017/067614
(87) International publication number: WO 2018/119083

(56) References cited:
- EP-A1- 1 914 345
- DE-A1-102012 006 760
- JP-A- 2001 303 478
- JP-A- 2004 107 413
- JP-A- 2015 052 076
- US-A1- 2005 042 443
- US-A1- 2010 021 751

## Description

### TECHNICAL FIELD

Embodiments of the present disclosure generally relate to compostable coated substrates and methods for producing compostable coated substrates. More particularly, embodiments of the present disclosure relate to compostable coated substrates comprising cellulosic substrates coated with compostable coatings including at least one compostable polymer and a dispersant, the compostable coated substrates having improved grease resistance.

### BACKGROUND

Aqueous-based polymer dispersions are used in a wide variety of technical applications such as adhesives, binders, sizing agents, sealants, primers, inks, paints, seed or grain coating systems, and paper coatings. Such dispersions are also used in pharmaceutical industries for drug delivery, in medical testing kits, or as additives in cosmetics. One use of such dispersions has been to form barrier coatings on paper, paperboard packaging, plastic films, and containers. However, the synthetic polymers used to form such dispersions and coatings are typically sourced from petroleum. This can sometimes make the polymers difficult to recycle or compost, and, as a result, the polymers may be problematic in landfills where biodegradability or compostability is required.

Moreover, even in cases where compostable or biodegradable polymers are utilized, conventional aqueous based polymer coatings utilize significant non-compostable materials which prevent the resultant polymer coating from being biodegradable. Specifically, these aqueous based polymer coatings involve dissolving the compostable or biodegradable polymers in volatile organic solvents, coating the dissolved materials onto substrates, and then removing the solvents. However, this generates problems in the handling and disposal of such volatile compounds. These problems included toxicity, flammability, and environmental pollution. In addition, such films can also leave some residual solvent in the coating which can adversely affect and prohibit compliance with food contact regulations.

Alternative efforts for making coatings comprising biodegradable polymers involve melting such polymers and then extruding them onto films. However, this often requires working the polymers at high temperatures which can cause premature degradation of the polymers. Other methods employ extrusion and drawing techniques that were material and energy intensive, or methods wherein a biodegradable plastic emulsion is applied to a sheet to form a biodegradable plastic layer, such as for example in JP2001303478. Additionally, melt extruded polymer coatings typically yield coat weights which are undesirable for many coating applications, for example, coating on paper or other cellulosic substrates. Depending on the substrate or substrates involved, these limitations of melt extruded polymers may be prohibitive.

### SUMMARY

Accordingly, there remains a need for aqueous based polymer coating processes which achieve compostable or biodegradable polymers coatings without volatile organic solvents. Moreover, further needs exist for compostable or biodegradable coatings, which achieve desirable lower coat weights while maintaining desirable barrier properties, for example, oil and grease resistant properties. The embodiments of the present disclosure meet these needs and the invention relates to a coated substrate, a method of producing a compostable coated substrate, and a product package, as defined in claims 1-13.

Various embodiments include a coated substrate including a substrate having first and second major surfaces and a compostable coating disposed on at least one of the first and second major surfaces of the substrate. The substrate includes a cellulosic material. The compostable coating, which has a coat weight of less than about 20 grams per square meters (gsm) on a dry weight basis, includes at least one compostable polymer and a dispersant. The coated substrate has a grease resistance ranging from about 4 to about 12 as measured in accordance with the TAPPI 559 kit test.

Various embodiments described herein also include a method of producing a compostable coated substrate comprising a substrate and a compostable coating. The method includes producing the compostable coated substrate by applying an aqueous dispersion comprising at least one compostable polymer and water onto the substrate. The substrate includes a cellulosic material and the compostable coating has a coat weight less than or equal to about 20 grams per square meter (gsm) on a dry weight basis. Further, the compostable coated substrate exhibits a grease resistance ranging from 4 to 12 as measured in accordance with the TAPPI 559 kit test.

Accordingly, various embodiments herein provide processes which are effective to apply aqueous dispersions of compostable polymers to compostable substrates. Further, various embodiments herein provide for compostable coated substrates with oil and grease resistant properties. Other features and will be apparent from the following detailed description and the appended claims.

### DETAILED DESCRIPTION

### Definitions

As used herein, a "compostable" substance is a substance that undergoes degradation by biological processes during composting to yield CO₂, water, inorganic compounds, and biomass at a rate consistent with other known compostable materials and leaves no visible, distinguishable, or toxic residue. The term "composting," as used in the present disclosure, refers to a managed process that controls the biological decomposition and transformation of materials into humus through aerobic mesophilic and thermophilic degradation. This definition of "compostable" is consistent with the requirements defined in ASTM D6868-11 for "plastics and Polymers as Coatings or Additives with Paper and Other Substrates." Compostable polymers may refer to polymeric materials that are compostable; also included within the scope of compostable polymers are copolymers and blends of compostable polymers.

As used herein, a "biodegradable polyester" refers to a polyester that undergoes degradation as a result of the activity of naturally occurring microorganisms, bacteria, archaea, fungi, algae, or combinations thereof. This definition of "biodegradable polyester" is consistent with the definition of biodegradable plastic as defined in ASTM D6868-11.

As used herein, "volatile organic solvents" refers to organic compounds having vapor pressures at ambient temperatures such that at least a portion of the compound evaporates, sublimates, or enters the surrounding atmosphere and is measurable by U.S. Environmental Protection Agency Test Method 24.

As used herein, a dispersion is "hydrolytically stable" if the polymers in the dispersion substantially retain their structure and molecular weight without degrading into monomeric forms or other decomposition materials over a specific period of time while stored at specific temperatures. In the context of the present disclosure, a dispersion is hydrolytically stable if it maintains a loss of solids of no more than 10% over a time period from thirty days to one year when stored at temperatures ranging from ambient conditions to 50°C.

### Compostable Coated Substrate

Embodiments of the present disclosure are directed to a coated substrate including a cellulosic substrate having a compostable coating disposed thereon. In various embodiments, the compostable coating includes at least one compostable polymer and a dispersant.

In various embodiments, the substrate includes first and second major surfaces and comprises cellulosic material. Cellulosic materials may include, but are not limited to, paper materials such as a cellulosic paper, construction paper, kraft paper, art paper, paper board, coated paper, or the like. The cellulosic material may also be, for example, a material, such as a fabric or textile formed from cellulose fibers. In one or more embodiments, the substrate is compostable.

In various embodiments, a compostable coating is disposed on at least one of the first and second major surfaces of the substrate. In other embodiments, the compostable coating is disposed on both the first and second major surfaces of the substrate. The compostable coating of various embodiments may be applied to the substrate as an aqueous-based dispersion of a compostable polymer.

The compostable polymer comprises a biodegradable polyester. The compostable polymer may comprise one or more polymers selected from the group consisting of polylactic acid (PLA), polymalate (PMA), polyhydroxyalkanoate (PHA), polycaprolactone (PCL), polyesteramide (PEA), polyhydroxyvalerate (PHV), polyhydroxyhexanoate (PHH), aliphatic copolyesters (PBSA), polyethylene furanoate (PEF), polybutylene succinate (PBS), polyglycolic acid, aliphatic polyaspartic polyurea, soybase polymers, polybutyl styrene (PBS), and mixtures and co-polymers thereof. In a specific embodiment, the dispersant comprises polyvinyl alcohol.

According to the invention, the compostable coating comprises from about 60 wt.% to about 99 wt.% of at least one compostable polymer based on the total dry weight of the compostable coating. In other embodiments, the compostable coating comprises from about 60 wt.% to about 95 wt.%, from about 70 wt.% to about 99 wt.%, from about 75 wt.% to about 95 wt.%, or from about 75 wt.% to about 90 wt.% based on the total dry weight of the compostable coating.

In addition to the compostable polymer, the compostable coating includes at least one dispersant. Without wishing to be bound by theory, the dispersant is believed to act to at least partially encapsulate particles of the compostable polymers to enhance the stability of such particles in the dispersion to prevent particles from agglomerating and settling or floating out of the dispersion. This encapsulation may reduce the interfacial tension between the at least one compostable polymer and the surrounding continuous phase of the dispersion. In some instances, the dispersant may act to form a coating on the surface of the compostable polymer particles. Further without being bound by theory, the dispersant helps facilitate the coating of the aqueous dispersion without other volatile organic solvents.

According to the invention, the dispersant is selected from the group consisting of polyvinyl alcohol, polyethylene glycols, cellulosic polysaccharides, including carboxymethyl cellulose, carboxymethyl hydroxyethyl cellulose, ethyl hydroxyethyl cellulose, hydroxyethyl cellulose, hydroxypropyl methyl cellulose, and methyl cellulose; biopolymer polysaccharides including gellan gum, rhamsan gum, whelan gum, xanthan gum, guar gum, hydroxypropyl guar gum, and sodium alginate; and any combinations thereof. In a specific embodiment, the dispersant comprises polyvinyl alcohol.

In various embodiments, the compostable coating includes from about 0.1 wt.% to about 3.0 wt.% dispersant based on a total dry weight of the compostable coating. For example, the compostable coating includes from about 0.5 wt.% to about 3.0 wt.%, from about 1.0 wt.% to about 3.0 wt.%, or from about 1.5 wt.% to about 2.5 wt.% dispersant based on the total dry weight of the compostable coating.

In further embodiments, the compostable coating may also include waxes. The wax can be, for example, an animal, plant, mineral, or petroleum wax. Example waxes may include, by way of example and not limitations, an emulsion or micronized wax including a Fischer-Tropsch wax, a carnauba wax, a polyethylene wax, a soy wax, a paraffin wax, a scale wax, a slack wax, other vegetable waxes, or mixtures thereof. The compostable coating may include a single wax or a blend of multiple waxes. Various amounts of wax are contemplated. For example, the compostable coating may include from 0 to 20 wt.% based on a dry weight of the compostable coating. In a further embodiment, the compostable coating may include from 1 to 15 wt.% based on a dry weight of the compostable coating.

In optional embodiments, other additives may be added to the compostable coating. According to some embodiments, the additives are compostable. However, in some other embodiments, one or more non-compostable additives may be included. In such embodiments, the amount of the non-compostable additives is less than 5 wt.% based on a dry weight of the compostable coating. Additionally, the compostable coating comprises no greater than 1 wt.% of any one non-compostable additive on a dry weight basis. Without being bound by theory, it is believed that limiting the presence of non-compostable additives in the compostable coating to less than 5 wt.% on a dry weight basis will not affect the compostable properties of embodiment coated substrates.

The compostable coating has a coat weight less than about 20 gsm, less than or equal to about 15 gsm, less than or equal to about 10 gsm, from about 1 gsm to about 5 gsm, or from about 1 gsm to about 20 gsm on a dry weight basis. Lower coat weights use less material and can be more industrially efficient, but often fail to impart the desired properties to the coated substrate. Surprisingly, using the compostable coating aqueous dispersions, compostable substrates, and methods described herein, the desired properties may be imparted to the coated substrate at relatively low coat weights less than 20 gsm.

### Coating Process

In a further embodiment, the compostable coating may be applied as an aqueous dispersion onto the cellulosic. In some embodiments, the aqueous dispersion may be substantially free of volatile organic compounds, fluorocarbons, or both. As used herein, "substantially free" means that the aqueous-based dispersion includes less than 0.2 weight percent (wt.%) based on a total weight of the aqueous-based dispersion.

Various embodiments are contemplated for making the aqueous-based dispersion. In one embodiment, the process comprises emulsifying the compostable polymer at a temperature of from between about 25° C to about 170° C by blending together the compostable polymer, water, and a dispersant to form a hydrolytically stable aqueous based dispersion of particles of the compostable polymer. According to one embodiment, the compostable polymer is heated to a temperature above its melting point before blending with water to form an aqueous dispersion. An aqueous solution of the dispersant is then blended into the dispersion.

In one or more such aqueous dispersions, the at least one compostable polymer may have a particle size of from about 0.2 µm to about 50 µm. In other embodiments, the at least one compostable polymer of the aqueous dispersion may have a particle size of from about 0.2 µm to about 30 µm, from about 0.2 µm to about 20 µm, from about 0.2 µm to about 10 µm, from about 0.2 µm to about 5 µm, or from about 0.2 µm to about 1 µm.

Alternatively, the compostable polymer may be provided as a micronized powder, and the blending process carried out at a temperature below the melting point of the compostable polymer. Any suitable mixing apparatus may be utilized including, for example, wet milling, a rotor stator, high pressure homogenization using a cavitation mixer, or ultrasonic mixing. Alternatively, other mixing devices and processes may be used.

In one embodiment, the compostable polymer, water, and dispersant are blended together to form a dispersion, and an aqueous solution optionally containing a rheology modifier is then blended into the dispersion. In one embodiment, a dispersion of the polymer melt, water, and dispersant is formed, and the dispersion is allowed to cool. An aqueous solution of a rheology modifier is blended into the cool dispersion. An optional pH buffering agent may also be added to the dispersion to stabilize it.

The rheology modifier may include various compositions suitable for improving the flow and stability of the aqueous dispersion. In one or more embodiments, the rheology modifier is selected from the group consisting of inorganic clays including bentonite, calcium carbonate, and fumed silica; cellulosic polysaccharides including carboxymethyl cellulose, carboxymethyl hydroxyethyl cellulose, ethyl hydroxyethyl cellulose, hydroxyethyl cellulose, hydroxypropyl methyl cellulose, methyl cellulose, and nanocrystalline cellulose; synthetic hydrocarbon polymers including polyacrylamide and copolymers thereof, polyethylene oxide, polyhydroxyethyl (meth)acrylate, poly(meth)acrylic acid and copolymers thereof, polyolefinicsulfonate and copolymers thereof, polyvinylpyrrolidone, copolymers of polystyrene and maleic anhydride, copolymers of polymethylene ether and maleic anhydride; biopolymer polysaccharides including gellan gum, rhamsan gum, whelan gum, xanthan gum, guar gum, hydroxypropyl guar gum, and sodium alginate.

In at least one embodiment, the dispersion includes particles of polylactic acid as a compostable polymer, polyvinyl alcohol as a dispersant, and xanthan gum as a rheology modifier. In other embodiments, the dispersion includes particles of polylactic acid as a compostable polymer, polyvinyl alcohol as a dispersant, and carboxymethyl cellulose as a rheology modifier.

Further as stated above, the aqueous dispersion may optionally include one or more pH buffering agents. The optional pH buffering agent may be used to sequester any residual acid monomers present in the compostable polymer composition. It may also aid in maintaining pH stability near a neutral pH of 7.0, thereby minimizing any hydrolytic instability, as described subsequently. In accordance with the present embodiments, the dispersion is hydrolytically stable over a broad pH range of from about 3.0 to about 11.5. Without wishing to be bound by theory, the optional pH buffering agent may also act to create a salt effect, causing the water soluble dispersant, rheology modifier, or both to precipitate onto the surface of the compostable polymer particles, providing additional protection from hydrolysis of the compostable polymer particles. In one embodiment, the pH buffering agent is selected from the group consisting of salts of weak acids or bases or other known buffering agents having pKₐ values of between 6 and 8.

In one embodiment, the compostable coating aqueous dispersion may include from about 10 wt.% to about 60 wt.% of at least one compostable polymer, from about 1.0 wt.% to about 8.0 wt.% of at least one dispersant, from about 0.01 wt.% to about 1.0 wt% of the rheology modifier, and the balance water, based on the total weight of the aqueous dispersion. In another embodiment, the aqueous dispersion may include from about 21 wt.% to about 49 wt.% of the compostable polymer, from about 1.0 wt.% to about 8.0 wt.% of the dispersant, and from about 0.01 wt.% to about 1.0 wt% of the rheology modifier, and the balance water, based on the total weight of the aqueous dispersion. In some embodiments, the dispersion may further include from about 3.0 wt.% to about 15.0 wt.% of a pH buffering agent and from about 0.1 to about 2.0 wt.% of a salt, based on the total weight of the aqueous dispersion. In at least one embodiment, the dispersion may include from about 3.0 wt.% to about 11.5 wt.% of a pH buffering agent and from about 0.1 wt.% to about 0.5 wt.% salt, based on the total weight of the aqueous dispersion.

In an example embodiment, the process for making an aqueous-based hydrolytically stable dispersion of polylactic acid comprises emulsifying the polylactic acid, water, polyvinyl alcohol, and xanthan gum (Keltrol® from CP Keltrol) at a temperature of from about 25 °C to about 170 °C and for a time sufficient to form an aqueous-based dispersion of particles of polylactic acid. The process can be carried out by first blending together the polylactic acid polymer with a first portion of water and polyvinyl alcohol to form a first mixture. The first mixture is then blended with a second portion of water and xanthan gum to form the dispersion.

Various suitable coating methods are contemplated for applying the aqueous dispersion onto the cellulosic substrate. The aqueous dispersion may be applied to cellulosic substrates via coating rod deposition, or spray coating. The dispersion may be applied to a substrate to provide a coated substrate including a functional coating without sacrificing the recyclability, repulpability, or the ability to compost the coated substrates.

### Barrier Properties

Moreover, in various embodiments, the coating may provide water resistance, oil and grease resistance, or both to the substrate. In some embodiments, the coating may provide barrier functionality to the coated substrate, and the coated substrate may exhibit resistance to water, oxygen transmission barrier, or moisture vapor transmission barrier properties. In various embodiments, barrier functionality for resistance to water can be measured by the Cobb Sizing Test, as defined in ASTM D-3285 (TAPPI T-441).

In various embodiments, the coated substrate exhibits a Cobb Value less than or equal to about 30, less than or equal to about 20, or less than or equal to about 10 after about 2 minutes. In other embodiments, the coated substrate has a grease resistance ranging from 4 to 12 or from 7 to 12, as measured in accordance with the TAPPI 559 kit test. For example, the coated substrate may have a TAPPI 559 kit test rating greater than or equal to 4, greater than or equal to 5, greater than or equal to 6, greater than or equal to 7, greater than or equal to 8, greater than or equal to about 9, greater than or equal to 10, greater than or equal to 11, or 12.

### Applications

Without being bound by theory, packages and foodservice items made from the coated substrates of various embodiments may exhibit longer useful life as the coating may aid in protecting the substrates and the contents of the package from the elements within the environments to which these items are exposed. In particular, it is believed that by providing barrier properties, the coating may resists the migration of the elements (including, but not limited to, oil, grease, and water) which can be present the environment and in the contents of the packages or items. Typically, when exposed to such elements, the substrates used in the construction of such packages or items may degrade, break down, or otherwise change in undesirable ways. However, by protecting the substrates from such migration, the coating may increase the useful life of the package or foodservice item. Moreover, by protecting the package from the environmental elements, the coating may not only help to protect the substrates, but may vicariously help to protect the contents of the package, thereby extending the shelf life of the product.

### TEST METHODS

### Cobb Sizing Test for Water Resistance

In the Cobb Sizing Test, a sample of coated substrate to be tested is cut approximately 12.5 x 12.5 centimeter (cm) square. The sample is weighed and placed on a neoprene mat, and a hollow metal cylinder is clamped upon the sample. The metal cylinder has an inside area of 100 cm², 25 cm², or 10 cm². If the sample material is textured, a neoprene gasket is placed between the sample and the cylinder, carefully aligning the inner edges of each. Water is then poured into the test cylinder at an amount of 100 mL for a 100 cm² cylinder. Proportionately less liquid is used for smaller cylinders. After pouring the liquid, a timer is started to measure the test period. The test period may vary depending on the sample being tested, but generally is 2 minutes, 15 minutes, or 30 minutes. At fifteen seconds before the expiration of the predetermined test period, the water is quickly poured from the cylinder, using care in not dropping any liquid on the untreated (outside) portion of the test specimen. The cylinder is removed from the sample and the sample is placed with wetted side up on a sheet of blotting paper. At exactly the end of the predetermined test period, a second sheet of blotting paper is placed on top of the sample to remove the surplus liquid by moving a stainless steel roller having a smooth face about 20 cm wide and weighing about 10 kg once forward and once backward over the sample and blotting paper without exerting downward force on the roller. The sample is then folded after removing it from between the blotter sheets and re-weighed. The initial weight of the sample is subtracted from the final weight of the sample and the gain in weight in grams is multiplied by 100 for a 100 cm² cylinder to obtain the weight of liquid absorbed in grams per square meter (g/m²).

### TAPPI 559 Kit Test for Oil/Grease Resistance

Oil and grease resistance may be measured according to TAPPI 559 kit test, also referred to as a 3M Kit test. In the TAPPI 559 kit test, twelve increasingly aggressive oil solutions are prepared using different amounts of castor oil, toluene, and n-Heptane. The mixtures of the kit solutions are provided in Table 1 below. The castor oil used in the TAPPI 559 kit test has a density of 0.969 g/cm³.

**Table 1: Compositions of Kit Test Solutions**

| Kit No. | Castor Oil* (g) | Toluene (mL) | n-Heptane (mL) |
|---|---|---|---|
| 1 | 969.0 | 0 | 0 |
| 2 | 872.1 | 50 | 50 |
| 3 | 775.2 | 100 | 100 |
| 4 | 678.3 | 150 | 150 |
| 5 | 581.4 | 200 | 200 |
| 6 | 484.5 | 250 | 250 |
| 7 | 387.6 | 300 | 300 |
| 8 | 290.7 | 350 | 350 |
| 9 | 193.8 | 400 | 400 |
| 10 | 96.9 | 450 | 450 |
| 11 | 0 | 500 | 500 |
| 12 | 0 | 450 | 550 |

In a TAPPI 559 kit test, a drop of a kit solution 1 is released onto the surface of a sample of the coated substrate from a height of about 13 millimeters and wiped off after 15.0 seconds. The surface of the sample is then immediately visually inspected for any darkening spots. Darkening spots indicate penetration of the kit solution into the sample coated substrate due to the presence of pinholes. The presence of darkening spots, and penetration of the kit solution into the sample, results in failure of the sample to pass the test. If the sample passes the test with kit solution 1, then the test is repeated with kit solution 2. Each time the sample passes the kit test, the next numbered kit solution is used. The test is repeated in the same manner with a higher numbered kit solution, until the highest numbered kit that remains on the surface of the sample for 15 seconds without causing darkening spots on the sample is identified. The highest numbered kit that does not cause failure is identified as the TAPPI 559 kit test rating. In various embodiments, the test may be repeated 5 times and the results averaged for each sample. Accordingly, possible TAPPI 559 kit test ratings may range from 1 to 12, with 12 being the highest TAPPI 559 kit test rating, indicating oil/grease resistance to the most aggressive oil mixture.

### EXAMPLES

In order that the embodiments may be more easily understood, reference is made to the following examples which are intended to illustrate embodiments disclosed and described herein. These examples are in no way limiting in scope.

### Examples 1-5

Five compostable coating aqueous dispersions were prepared by mixing the components together until uniform in a paddle mixer at room temperature. Compostable coated substrate samples were prepared by passing a size 4 Buschman rod coated in each one of the five different formulations of compostable coating aqueous dispersions over a paper substrate twice, in order to apply two layers of the aqueous dispersion. The second layer was applied before the first layer was allowed to dry. After the coatings were applied to the substrate, there were put in a forced air oven at 105°C for one minute. The samples were then allowed to cool to room temperature before testing. The formulation for the aqueous dispersion used in each sample is provided in Table 2 below. Table 2 also details the dry weight formulations of the corresponding cured coatings. The polylactic acid used is a commercially available polylactic acid sold under the tradename Vercet A1000 from NatureWorks (Minnetonka, Minnesota, United States) and the polyvinyl alcohol used is a commercially available produce sold under the tradename Selvol 203 from the Sekisui Chemical Company (Japan). Wax 1 and Wax 2 are commercially available wax emulsions produced by Michelman, Inc. (Blue Ash, Ohio, United States). Wax 1 is sold under the tradename Michem® Emulsion 77150 and Wax 2 is sold under the tradename Michem® Emulsion 80939M2.

**Table 2: Compostable Coating Formulations**

| | Example 1 | Example 2 | Example 3 | Example 4 | Example 5 |
|---|---|---|---|---|---|
| **Weight percentage based on the total weight of the aqueous dispersion (%)** | | | | | |
| Polylactic acid | 43.875 | 38.025 | 33.35 | 38.025 | 33.350 |
| Polyvinyl alcohol | 1.125 | 0.975 | 0.855 | 0.975 | 0.855 |
| Wax 1 | 0 | 2.3 | 4.6 | 0 | 0 |
| Wax 2 | 0 | 0 | 0 | 1.00 | 2.00 |
| Water | 54.00 | 54.50 | 55.35 | 57.00 | 59.40 |
| Total Solids | 46.00 | 45.50 | 44.65 | 43.00 | 40.60 |

| **Weight percentage based on the total dry weight of the coating (%)** | | | | | |
|---|---|---|---|---|---|
| PLA | 95.01 | 83.57 | 74.69 | 88.43 | 82.14 |
| Polyvinyl alcohol | 2.44 | 2.14 | 1.91 | 2.27 | 2.11 |
| Wax 1 | 0.00 | 5.05 | 10.30 | 0.00 | 0.00 |
| Wax 2 | 0.00 | 0.00 | 0.00 | 2.33 | 4.93 |

### Comparative Example A

Comparative Example A, a commercially available paper cup coated with extruded PLA, was obtained to evaluate the effectiveness of the compostable coated substrates of Examples 1-5.

### Comparative Example B

Comparative Example B was prepared by coating a paper substrate with a non-compostable coating. The non-compostable coating was prepared as an aqueous dispersion by combining water, a styrene-acrylate copolymer, a wax emulsion, and emulsifying agents in a paddle mixer at room temperature until uniform. The coated substrate sample was then prepared by passing a size 4 Buschman rod coated in the prepared aqueous dispersions over a paper substrate twice, in order to apply two layers of the aqueous dispersion. The second layer was applied before the first layer was allowed to dry. After the coating was applied to the substrate, it was put in a forced air oven at 105°C for one minute. The samples were then allowed to cool to room temperature before testing.

To determine coat weights of all samples, the uncoated substrate was first weighed. Then after the coating was applied and cured, and the coated substrates were weighed again. The difference in coated and uncoated weight of the substrate was calculated in grams per square meter (gsm). All samples were then tested for oil and grease resistance according to TAPPI 559 kit test, as described in greater detail previously. Samples were additionally tested for water resistance using the Cobb Sizing Test, according to ASTM D-3285, also described in greater detail previously. The time interval for the Cobb Sizing Test was two minutes. The coat weight and results for the TAPPI 559 kit test and Cobb Sizing Test are shown in Table 3 for all samples. An uncoated substrate was also tested as a control.

**Table 3: Coat Weight, Oil and Grease Resistance, and Water Resistance**

| **Sample** | **Coat Weight (gsm)** | **TAPPI 559 Kit Test** | **Cobb Sizing Test** |
|---|---|---|---|
| Uncoated Substrate | N/A | 0 | 27 |
| Comparative Example A | 30 | 12 | 0.4 |
| Comparative Example B | 2.8 | 12 | 0.4 |
| Example 1 | 3.8 | 12 | 12 |
| Example 2 | 3.1 | 10 | 8 |
| Example 3 | 3.4 | 9 | 8 |
| Example 4 | 3.8 | 7 | 4 |
| Example 5 | 2.5 | 9 | 7 |

As demonstrated by the data in Table 3, Comparative Example A, which included an extruded PLA coating, had similar values of oil and grease resistance as demonstrated by the TAPPI 559 kit test results of Examples 1-5. However, surprisingly, Examples 1-5 were able to achieve this oil and grease resistance with less than 10% of the coat weight as Comparative Example A. Additionally, the data in Table 3 illustrates that the compostable coatings of Examples 1-5 are able to provide similar oil and grease resistance as the non-compostable coating of Comparative Example B.

Examples 1-5 demonstrate that compostable coatings may be applied at coat weights less than the melt extruded coated substrates and exhibit the same oil and grease resistant properties. However, some applications of the compostable coated substrates described herein require fine-tuned oil and grease resistance. Embodiments of the present disclosure provide for compostable coated substrates having an oil and grease resistance of from 4 to 12, as measured in accordance with the TAPPI 559 kit test. By varying the concentration and type of dispersant and rheology modifier in the compostable coating aqueous dispersion, the oil and grease resistance of embodiment compostable coated substrates may be tuned to exhibit a particular grease resistance.

Five different compostable coating aqueous dispersions were prepared by mixing the components together in a paddle mixer at room temperature. Compostable coated substrate Examples 6-10 were prepared using the same coating process as Examples 1-5. The samples were then allowed to cool to room temperature before being tested for oil and grease resistance. The dry weight formulations for the aqueous dispersions used in each sample are provided in Table 4 below along with their oil and grease resistance as measured in accordance with a TAPPI 559 kit test. As used in Table 4, polyvinyl alcohol 1 is Selvol™ Polyvinyl Alcohol 203 from Sekisui Specialty Chemicals America, LLC and polyvinyl alcohol 2 is Selvol™ Polyvinyl Alcohol 523 from Sekisui Specialty Chemicals America, LLC. The polylactic acid used is a commercially available polylactic acid sold under the tradename Vercet A1000 from NatureWorks (Minnetonka, Minnesota, United States). Wax 1 and Wax 2 are commercially available wax emulsions produced by Michelman, Inc. (Blue Ash, Ohio, United States). Wax 1 is sold under the tradename Michem® Emulsion 77150 and Wax 2 is sold under the tradename Michem® Emulsion 80939M2.

**Table 4: Oil and Grease Resistance of Coated Substrates with Varying Dispersant Composition**

| Sample | **Weight percentage based on the total dry weight of the coating (%)** | | | | | TAPPI 559 Kit Test |
|---|---|---|---|---|---|---|
| | Polylactic Acid | Polyvinyl alcohol 1 | Polyvinyl alcohol 2 | Wax 1 | Wax 2 | |
| Example 6 | 95 | 5 | 0 | 0 | 0 | 0 |
| Example 7 | 85.5 | 4.5 | 0 | 0 | 10 | 3 |
| Example 8 | 85.5 | 4.5 | 0 | 10 | 0 | 5 |
| Example 9 | 85.5 | 3.4 | 1.1 | 10 | 0 | 8 |
| Example 10 | 85.5 | 2.75 | 2.75 | 10 | 0 | 10 |

As can be seen in Table 4, by adjusting this relationship of additives in the aqueous dispersion, including the type of dispersant used, the oil and grease resistance may be tuned to the level appropriate, depending on the application.

It is noted that terms like "preferably," "commonly," and "typically" are not utilized herein to limit the scope of the claimed subject matter or to imply that certain features are critical, essential, or even important to the structure or function of the claimed subject matter. Rather, these terms are merely intended to highlight alternative or additional features that may or may not be utilized in particular embodiments.

For the purposes of describing and defining various embodiments it is noted that the term "device" is utilized herein to represent a combination of components and individual components, regardless of whether the components are combined with other components. For the purposes of describing and defining various embodiments, it is noted that the term "substantially" is utilized herein to represent the inherent degree of uncertainty that may be attributed to any quantitative comparison, value, measurement, or other representation. Unless the meaning is clearly to the contrary, all ranges set forth herein are deemed to be inclusive of all values within the recited range as well as the endpoints.

Having described various embodiments in detail and by reference to specific embodiments thereof, it will be apparent that modifications and variations are possible without departing from the scope of the claimed subject matter. Thus it is intended that the specification cover the modifications and variations of the various embodiments described herein provided such modification and variations come within the scope of the appended claims and their equivalents.

## Claims

1. A coated substrate comprising:
a substrate comprising first and second major surfaces, wherein the substrate comprises cellulosic material; and
a compostable coating comprising 60 wt% to 99 wt% of at least one compostable polymer based on a total dry weight of the compostable coating and a dispersant, wherein the dispersant is selected from the group consisting of polyvinyl alcohol, polyethylene glycols, cellulosic polysaccharides, biopolymer polysaccharides, and any combination thereof, wherein the compostable polymer comprises biodegradable polyester, and wherein the compostable coating being disposed on at least one of the first and second major surfaces and having a coat weight of less than about 20 grams per square meters (gsm) on a dry weight basis,
wherein the coated substrate has a grease resistance ranging from 4 to 12 as measured in accordance with the TAPPI 559 kit test.

2. A method of producing a compostable coated substrate comprising a substrate and a compostable coating, the method comprising:
producing the compostable coated substrate by applying an aqueous dispersion comprising 60 wt% to 99 wt% of at least one compostable polymer based on a total dry weight of the compostable coating, a dispersant, and water onto the substrate which comprises cellulosic material, wherein the dispersant is selected from the group consisting of polyvinyl alcohol, polyethylene glycols, cellulosic polysaccharides, biopolymer polysaccharides, and any combination thereof,
wherein the compostable polymer comprises biodegradable polyester,
wherein the compostable coating comprises a coat weight less than or equal to about 20 grams per square meter (gsm) on a dry weight basis, and
wherein the compostable coated substrate has a grease resistance ranging from 4 to 12 as measured in accordance with the TAPPI 559 kit test.

3. The coated substrate or the method of any of the preceding claims, wherein the coated substrate comprises paper.

4. The coated substrate or the method of any of the preceding claims, wherein the coated substrate exhibits a Cobb Value less than or equal to about 20 after about 2 minutes when measured according to ASTM D-3285.

5. The coated substrate or the method of any of the preceding claims, wherein the compostable coating has a coat weight less than or equal to about 10 gsm on a dry weight basis; preferably a coat weight of from about 1 gsm to about 5 gsm on a dry weight basis.

6. The coated substrate or the method of any of the preceding claims, wherein the compostable coating comprises less than 5 wt.% of non-compostable additives on a dry weight basis.

7. The coated substrate or the method of any of the preceding claims, wherein the compostable coating comprises no greater than 1 wt.% of any one non-compostable additive on a dry weight basis.

8. The coated substrate or the method of any of the preceding claims, wherein the biodegradable polyester comprises a polymer selected from the group consisting of polylactic acid (PLA), polymalate (PMA), polyhydroxyalkanoate (PHA), polyhydroxybutyrate (PHB), polyhydroxyvalerate (PHV), polyhydroxyhexanoate (PHH), aliphatic copolyesters (PBSA), polyethylene furanoate (PEF), polybutylene succinate (PBS), poly(poly sebate) (PPS), and polyglycolic acid.

9. The coated substrate or the method of any of the preceding claims, wherein the compostable coating further comprises a rheology modifier.

10. The coated substrate or the method of any of the preceding claims, wherein the rheology modifier is selected from the group consisting of inorganic clays, cellulosic polysaccharides, synthetic hydrocarbon polymers, polyolefinic sulfonate and copolymers thereof, polyvinylpyrrolidone, copolymers of polystyrene and maleic anhydride, copolymers of polymethylene ether and maleic anhydride, biopolymer polysaccharides, acrylic copolymers, polyacrylate ammonium salts, polyether carboxylate polymers, and base-neutralized ethylene acrylic acid copolymers.

11. The coated substrate or the method of any of the preceding claims, wherein the compostable coating comprises wax.

12. The coated substrate or the method of any of the preceding claims, wherein the coated substrate has a grease resistance ranging from 7 to 12 as measured in accordance with the TAPPI 559 kit test.

13. A product package comprising the coated substrate of any of the preceding claims 1, or 3 to 12.

## Patentansprüche

1. Beschichtetes Substrat, umfassend:
ein Substrat, umfassend eine erste und eine zweite Hauptoberfläche, wobei das Substrat ein Zellulosematerial umfasst; und
eine kompostierbare Beschichtung, umfassend 60 Gew.-% bis 99 Gew.-% mindestens eines kompostierbaren Polymers, basierend auf einem Gesamttrockengewicht der kompostierbaren Beschichtung, und ein Dispergiermittel, wobei das Dispergiermittel ausgewählt ist aus der Gruppe bestehend aus Polyvinylalkohol, Polyethylenglykolen, Zellulosepolysacchariden, Biopolymerpolysacchariden, und jeder Kombination davon, wobei das kompostierbare Polymer biologisch abbaubares Polyester umfasst, und wobei die kompostierbare Beschichtung auf mindestens einer der ersten und der zweiten Hauptoberfläche angeordnet ist und ein Beschichtungsgewicht von weniger als etwa 20 Gramm pro Quadratmeter (g/m2) auf einer Trockengewichtsbasis aufweist,
wobei das beschichtete Substrat eine Fettbeständigkeit im Bereich von 4 bis 12 aufweist, gemessen nach dem TAPPI 559 Kit-Test.

2. Verfahren zur Herstellung eines kompostierbaren beschichteten Substrats, umfassend ein Substrat und eine kompostierbare Beschichtung, wobei das Verfahren umfasst:
Herstellen des kompostierbaren beschichteten Substrats durch Aufbringen einer wässrigen Dispersion, umfassend 60 Gew.-% bis 99 Gew.-% mindestens eines kompostierbaren Polymers, basierend auf einem Gesamttrockengewicht der kompostierbaren Beschichtung, ein Dispergiermittel und Wasser auf dem Substrat, das Zellulosematerial umfasst, wobei das Dispergiermittel ausgewählt ist aus der Gruppe bestehend aus Polyvinylalkohol, Polyethylenglykolen, Zellulosepolysacchariden, Biopolymerpolysacchariden und jeder Kombination davon,
wobei das kompostierbare Polymer biologisch abbaubares Polyester umfasst,
wobei die kompostierbare Beschichtung ein Schichtgewicht von weniger als oder gleich etwa 20 Gramm pro Quadratmeter (g/m2) auf Trockengewichtsbasis umfasst, und
wobei das kompostierbare beschichtete Substrat eine Fettbeständigkeit im Bereich von 4 bis 12 aufweist, gemessen nach dem TAPPI 559 Kit-Test.

3. Beschichtetes Substrat oder Verfahren nach einem der vorhergehenden Patentansprüche, wobei das beschichtete Substrat Papier umfasst.

4. Beschichtetes Substrat oder Verfahren nach einem der vorhergehenden Patentansprüche, wobei das beschichtete Substrat nach etwa 2 Minuten einen Cobb-Wert von weniger als oder gleich etwa 20 aufweist, wenn nach ASTM D-3285 gemessen wird.

5. Beschichtetes Substrat oder Verfahren nach einem der vorhergehenden Patentansprüche, wobei die kompostierbare Beschichtung ein Schichtgewicht von weniger als oder gleich etwa 10 g/m2 auf Trockengewichtsbasis aufweist; vorzugsweise ein Schichtgewicht von etwa 1 g/m2 bis etwa 5 g/m2 auf Trockengewichtsbasis.

6. Beschichtetes Substrat oder Verfahren nach einem der vorhergehenden Patentansprüche, wobei die kompostierbare Beschichtung weniger als 5 Gew.-% nicht kompostierbare Additive auf Trockengewichtsbasis umfasst.

7. Beschichtetes Substrat oder Verfahren nach einem der vorhergehenden Patentansprüche, wobei die kompostierbare Beschichtung nicht mehr als 1 Gew.-% eines nicht kompostierbaren Additivs, bezogen auf das Trockengewicht, umfasst.

8. Beschichtetes Substrat oder Verfahren nach einem der vorhergehenden Patentansprüche, wobei das biologisch abbaubare Polyester ein Polymer umfasst, ausgewählt aus der Gruppe bestehend aus Polymilchsäure (PLA), Polymalat (PMA), Polyhydroxyalkanoat (PHA), Polyhydroxybutyrat (PHB), Polyhydroxyvalerat (PHV), Polyhydroxyhexanoat (PHH), aliphatischen Copolyestern (PBSA), Polyethylenfuranoat (PEF), Polybutylensuccinat (PBS), Poly(polysebate) (PPS) und Polyglykolsäure.

9. Beschichtetes Substrat oder Verfahren nach einem der vorhergehenden Patentansprüche, wobei die kompostierbare Beschichtung ferner einen Rheologiemodifikator umfasst.

10. Beschichtetes Substrat oder Verfahren nach einem der vorhergehenden Patentansprüche, wobei der Rheologiemodifikator ausgewählt ist aus der Gruppe bestehend aus anorganischen Tonen, Zellulosepolysacchariden, synthetischen Kohlenwasserstoffpolymeren, Polyolefinsulfonat und Copolymeren davon, Polyvinylpyrrolidon, Copolymeren von Polystyrol und Maleinsäureanhydrid, Copolymeren von Polymethylenether und Maleinsäureanhydrid, Biopolymer-Polysacchariden, Acryl-Copolymeren, Polyacrylat-Ammoniumsalzen, Polyether-Carboxylat-Polymeren und basenneutralisierten Ethylen-Acrylsäure-Copolymeren.

11. Beschichtetes Substrat oder Verfahren nach einem der vorhergehenden Patentansprüche, wobei die kompostierbare Beschichtung Wachs umfasst.

12. Beschichtetes Substrat oder Verfahren nach einem der vorhergehenden Patentansprüche, wobei das beschichtete Substrat eine Fettbeständigkeit im Bereich von 7 bis 12 aufweist, gemessen nach dem TAPPI 559 Kit-Test.

13. Produktverpackung, umfassend das beschichtete Substrat nach einem der vorhergehenden Ansprüche 1 oder 3 bis 12.

## Revendications

1. Substrat revêtu comprenant :
un substrat comprenant une première et une deuxième surfaces principales, où le substrat comprend un matériau cellulosique ; et
un revêtement compostable pour lequel 60 à 99 % du poids est constitué d'au moins un polymère compostable sur la base du poids sec total du revêtement compostable, et d'un dispersant, où le dispersant est sélectionné dans le groupe composé de l'alcool polyvinylique, de glycols de polyéthylène, de polysaccharides cellulosiques, de polysaccharides biopolymères et de toute combinaison de ceux-ci, où le polymère compostable comprend du polyester biodégradable, et où le revêtement compostable est disposé sur au moins une des première et deuxième surfaces principales et a un poids de revêtement inférieur à environ 20 grammes par mètre carré (g/m²) sur une base de poids sec,
où le substrat revêtu présente une résistance aux graisses allant de 4 à 12, telle que mesurée conformément au test du kit TAPPI 559.

2. Procédé de production d'un substrat revêtu compostable comprenant un substrat et un revêtement compostable, le procédé comprenant :
la production du substrat revêtu compostable en appliquant une dispersion aqueuse comprenant un polymère compostable à hauteur de 60 à 99 % du poids, sur la base d'un poids sec total du revêtement compostable, un dispersant et de l'eau sur le substrat qui comprend un matériau cellulosique, où le dispersant est sélectionné dans le groupe composé de l'alcool polyvinylique, de glycols de polyéthylène, de polysaccharides cellulosiques, de polysaccharides biopolymères et de toute combinaison de ceux-ci,
où le polymère compostable comprend du polyester biodégradable,
où le revêtement compostable comprend un poids de revêtement inférieur ou égal à environ 20 grammes par mètre carré (g/m²) sur une base de poids sec, et
où le substrat revêtu compostable présente une résistance aux graisses allant de 4 à 12, telle que mesurée conformément au test du kit TAPPI 559.

3. Le substrat revêtu ou le procédé de l'une quelconque des revendications précédentes, où le substrat revêtu comprend du papier.

4. Le substrat revêtu ou le procédé de l'une quelconque des revendications précédentes, où le substrat revêtu présente une valeur Cobb inférieure ou égale à environ 20 après environ 2 minutes lorsque la mesure est effectuée conformément à la norme ASTM D-3285.

5. Le substrat revêtu ou le procédé de l'une quelconque des revendications précédentes, où le revêtement compostable a un poids de revêtement inférieur ou égal à environ 10 g/m² sur une base de poids sec, de préférence un poids de revêtement d'environ 1 g/m² à environ 5 g/m² sur une base de poids sec.

6. Le substrat revêtu ou le procédé de l'une quelconque des revendications précédentes, où le poids du revêtement compostable est composé à moins de 5 % d'additifs non compostables sur une base de poids sec.

7. Le substrat revêtu ou le procédé de l'une quelconque des revendications précédentes, où le poids du revêtement compostable est composé à 1 % au maximum de tout additif non compostable sur une base de poids sec.

8. Le substrat revêtu ou le procédé de l'une quelconque des revendications précédentes, où le polyester biodégradable comprend un polymère sélectionné dans le groupe composé de :
acide polylactique (PLA), poly(malate) (PMA), polyhydroxyalkanoate (PHA), poly(hydroxybutyrate) (PHB), poly(hydroxyvalérate) (PHV), poly(hydroxyhexanoate) (PHH), copolyesters aliphatiques (PBSA), polyéthylène furanoate (PEF), poly(succinate de butyle) (PBS), poly(polysébate) (PPS), et acide polyglycolique.

9. Le substrat revêtu ou le procédé de l'une quelconque des revendications précédentes, où le revêtement compostable comprend en outre un modificateur de rhéologie.

10. Le substrat revêtu ou le procédé de l'une quelconque des revendications précédentes, où le modificateur de rhéologie est sélectionné dans le groupe composé de : argiles inorganiques, polysaccharides cellulosiques, polymères d'hydrocarbures synthétiques, sulfonate polyoléfinique et copolymères de celui-ci, polyvinylpyrrolidone, copolymères de polystyrène et d'anhydride maléique, copolymères d'éther de polyméthylène et d'anhydride maléique, biopolymères polysaccharides, copolymères acryliques, sels d'ammonium de polyacrylate, polymères carboxylate de polyéther et copolymères d'acide acrylique et d'éthylène neutralisés par une base.

11. Le substrat revêtu ou le procédé de l'une quelconque des revendications précédentes, où le revêtement compostable comprend de la cire.

12. Le substrat revêtu ou le procédé de l'une quelconque des revendications précédentes, où le substrat revêtu présente une résistance aux graisses allant de 7 à 12, telle que mesurée conformément au test du kit TAPPI 559.

13. Un emballage de produit comprenant le substrat revêtu selon l'une quelconque des revendications 1, ou 3 à 12 précédentes.
